# EUROPÄISCHE PATENTSCHRIFT

(11) **EP 2 614 948 B1**
(45) Veröffentlichungstag und Bekanntmachung des Hinweises auf die Patenterteilung: **27.08.2014**
(21) Anmeldenummer: 13150661.0
(22) Anmeldetag: 09.01.2013
(51) Int. Cl.: B29C 49/32, B29C 49/56, B29C 49/04

(54) **Blasformsystem sowie Verfahren zur Blasformung von Hohlkörpern**
Blow-moulding system and method for the blow-moulding of hollow bodies
Système de formage par soufflage ainsi que procédé de formage par soufflage de corps creux

(30) Priorität: 10.01.2012 DE 102012100156
(43) Veröffentlichungstag der Anmeldung: 17.07.2013
(73) Patentinhaber: EXTRAPLAST Maschinen GmbH, 53842 Troisdorf (DE)
(72) Erfinder: Forsbach, Heinz-Peter, 53797 Lohmar (DE)
(74) Vertreter: Fritz, Edmund Lothar

(56) Entgegenhaltungen:
- EP-A1- 0 802 035
- DE-A1- 4 403 698
- US-A- 5 975 881
- US-A1- 2003 091 683
- US-A1- 2007 176 330

## Beschreibung

Die vorliegende Erfindung betrifft ein Blasformsystem zur Herstellung von Hohlkörpern umfassend wenigstens eine Extrudereinrichtung sowie wenigstens eine Blasformeinrichtung, die entweder stationär bei Einsatz einer Blasformeinrichtung, oder bei Einsatz mehrerer Blasformeinrichtungen mittels eines Antriebs entlang einer Führung gegenüber der Extrudereinrichtung linear verfahrbar ist, wobei weiterhin eine Antriebseinrichtung vorgesehen ist, mittels derer die beiden die Formhälften der Blasformeinrichtung tragenden Schließenhälften der Blasformeinrichtung zwecks Öffnen bzw. Schließen der Blasform gegeneinander verfahrbar sind, wobei eine Antriebskombination umfassend mindestens zwei voneinander unabhängig jeweils für sich oder gemeinsam betätigbare Antriebseinrichtungen vorgesehen ist, mittels derer erstens ein Verfahren der beiden Formhälften der Blasformeinrichtung gegeneinander beim Öffnen oder Schließen der Blasform möglich ist, mittels derer zweitens ein asymmetrisches Verfahren lediglich einer der Formhälften relativ zu der anderen Formhälfte, welche ihre Position beibehält, möglich ist und mittels derer drittens ein gemeinsames Verfahren beider Formhälften in einer Bewegungsrichtung bei geschlossener oder geöffneter Blasform möglich ist, wobei jede der beiden Formhälften einer Blasformeinrichtung jeweils unabhängig voneinander relativ zu der jeweils anderen Formhälfte verfahrbar ist, während dabei die jeweils andere Formhälfte der gleichen Blasformeinrichtung feststeht.

In der DE 44 03 698 A1 ist ein Blasformsystem zur Herstellung von Hohlkörpern beschrieben, welches mit zwei Blasformeinheiten arbeitet, die jeweils auf einem Schlitten angeordnet sind, wobei beide Schlitten hintereinander angeordnet sind und linear auf Schienen verfahrbar sind, um die jeweilige Position des Schlittens gegenüber einer Extrudereinrichtung zu verändern. Jede der beiden Blasformeinheiten umfasst jeweils zwei Formhälften, die von Tragplatten getragen werden, welche wiederum an Stützen angebracht sind. Die so gebildeten Schließeneinheiten weisen je zwei Schließenhälften auf, welche bei Beaufschlagung einer Kolben-Zylinder-Einheit gegeneinander verfahrbar sind, um die Blasform zu Öffnen oder zu Schließen. Die Bewegung der beiden Schließenhälften und somit der beiden Formhälften der Blasform ist dabei, wie auch ansonsten bei derartigen Blasformsystemen üblich, immer so, dass sich beim Öffnen der Blasform beide Schließenhälften symmetrisch voneinander weg bewegen bzw. dass beim Schließen der Blasform sich beide Schließenhälften symmetrisch aufeinander zu bewegen. Damit beide Blasformeinheiten abwechselnd von nur einem Extruderkopf jeweils mit dem Vorformling bestückt werden können, ist bei diesem bekannten Blasformsystem vorgesehen, dass die jeweils zu bestückende Blasformeinheit bei geöffneter Blasform aus der Verfahrlinie heraus um eine senkrechte Achse unter den Extruderkopf schwenkt, um den Vorformling aufzunehmen. Anschließend schwenkt die Blasformeinheit zurück, die Blasform wird geschlossen und die Blasformeinheit verfährt in eine Arbeitsposition, während die zweite Blasformeinheit in die Ladeposition neben den Extruderkopf fährt und herausschwenkt, um einen Vorformling aufzunehmen.

In der DE 199 27 138 C2 ist ein Blasformsystem beschrieben, bei dem zwei Blasformstationen vorhanden sind, die beide in einer Flucht auf einem gemeinsamen Schlitten angeordnet sind, welcher insgesamt gegenüber einem Extruderkopf verfahrbar ist. Jede Blasformstation umfasst jeweils zwei Formaufspannplatten, wobei die jeweils inneren Formaufspannplatten beider Stationen mit einer fest auf dem Schlitten verankerten Säule verbunden sind. Die jeweils äußeren Formaufspannplatten beider Stationen sind über je einen Spindelantrieb auf dem Schlitten verfahrbar, so dass man zum Schließen oder Öffnen der Blasform die jeweils äußere Formhälfte jeder Station relativ gegenüber der dabei fest stehenden inneren Formhälfte verfahren kann. Außerdem ist es möglich durch Verfahren des Schlittens um einen kurzen Weg die relative Position der inneren Blasformhälfte gegenüber dem Extruderkopf zu verändern. Durch Verfahren des Schlittens können auch beide Blasformhälften einer Blasformstation gemeinsam in einer Richtung linear verfahren werden. Hier besteht allerdings bei der bekannten Vorrichtung der Nachteil, dass für die letztgenannte Operation der gesamte Schlitten verfahren werden muss und folglich ein hohes Gewicht bewegt werden muss, da dabei auch die nicht aktive zweite Blasformstation, die sich ja auf dem gleichen Schlitten befindet, mit verfährt. Einschränkungen in den Bewegungsfreiheitsgraden ergeben sich durch den konstruktiven Grundgedanken, die jeweils innere Hälfte der Blasform beider Blasformstationen an einer einzigen auf dem Schlitten festen Säule anzubringen. Für das Schließen der Blasform sind bei dieser bekannten Blasformvorrichtung zwei Operationen erforderlich, zunächst verfährt der Schlitten um den halben Schließweg und danach verfährt die äußere Blasformhälfte mittels des dieser zugeordneten Antriebs um den ganzen Schließweg in die Gegenrichtung. Es ist bei diesem bekannten Blasformsystem nicht möglich, nur die jeweils innere Blasformhälfte auf dem Schlitten zu Verfahren. Für eine Relativbewegung der inneren Blasformhälfte gegenüber dem Extruderkopf muss immer der gesamte Schlitten verfahren werden. Für eine Relativbewegung beider Blasformhälften einer Station gegeneinander kann nur jeweils die äußere Blasformhälfte verfahren werden, da die jeweils innere Blasformhälfte auf dem Schlitten fest angebracht ist.

Bei dem aus der DE 199 27 138 C2 bekannten Blasformsystem ist es auch möglich jede der beiden Blasformstationen um einen langen Weg zu Verfahren, um die jeweilige Blasformstation in eine Position unter den Extruderkopf zu fahren, in der der Vorformling aufgenommen werden kann, wobei bei dieser Operation jedoch der Schlitten mit beiden Blasformstationen in gleicher Richtung linear verfährt wie die Schließenhälften beim Schließen der Blasform verfahren. Bei diesem bekannten Blasformsystem ist es zwar auch möglich, den Blasdorn zu verfahren, jedoch nur dann, wenn der Schlitten mit der Blasformstation insgesamt verfahren wird oder gemeinsam mit der auf dem Schlitten verfahrbar angeordneten äußeren Schließenhälfte. Der Antrieb für das Verfahren des Blasdorns ist mit demjenigen für das Verfahren der äußeren Schließenhälfte gekoppelt und beide werden achsgleich über die gleiche Spindel angetrieben, wobei über verschiedene Steigungen unterschiedliche Wege zurückgelegt werden. Der Blasdorn kann somit nicht unabhängig von der äußeren Schließenhälfte verfahren werden, wodurch sich Einschränkungen in den Operationen des Blasformsystems ergeben.

Die DE 196 15 798 A1 beschreibt ein Blasformsystem mit zwei Blasformeinrichtungen sowie ein Blasformverfahren zur Herstellung von Hohlkörpern mittels dieses Blasformsystems. Bei diesem Blasformsystem sind die Blasformeinrichtungen (Blasformeinheiten) jeweils in einer geführten linearen Bewegung rechtwinklig zur Verfahrrichtung der Formhälften beim Öffnen bzw. Schließen der Blasform aus einer mittleren Aufnahmestation in eine von zwei Entnahmestationen verfahrbar. Jeder Blasformeinrichtung ist dabei jeweils eine Entnahmestation zugeordnet. In der Aufnahmestation kann jeweils eine der beiden Blasformeinrichtungen mit einem neuen Vorformling bestückt werden, während bei der zweiten Blasformeinrichtung in der Entnahmestation das Ausblasen des Hohlkörpers und die Entnahme des fertigen Hohlkörpers erfolgt. Bei diesem bekannten Blasformverfahren kann jedoch nicht die Entnahme eines geblasenen Hohlkörpers, in einer Position der Blasdornvorrichtung unter dem Extruderkopf, und die gleichzeitige Aufnahme eines neuen Vorformlings für den nächsten Blasvorgang in der gleichen Blasformeinrichtung erfolgen. Die Zykluszeit ist somit verhältnismäßig lang, da erst die Entnahme des fertigen Hohlkörpers in der Entnahmestation erfolgt, danach die jeweilige Blasformeinrichtung quer zur Bewegungsrichtung der Blasformhälften in die Aufnahmestation verfährt und erst dann dort die Aufnahme des neuen Vorformlings erfolgt.

In der DE 197 47 698 C2 sowie in der parallelen US 5,975,881 A ist ein Blasformsystem der eingangs genannten Gattung beschrieben, bei dem die beiden Formträgerplatten der Blasform jeweils von Lagerböcken getragen werden, die mit Antriebsaggregaten in Form von feststehenden Gewindestangen ausgestattet sind, welche sich jeweils unterhalb der Lagerböcke befinden. Unterseitig an den Lagerböcken sind jeweils elektrische Hohlwellenmotoren mit rotierenden Gewindemuttern befestigt, so dass die Lagerböcke auf den feststehenden Gewindestangen verfahren werden können. Dadurch ist ein schnelles symmetrisches Verfahren der beiden Blasformhälften gegeneinander möglich. Weiterhin ist ein Verriegelungssystem für die Blasformhälften mit vier Kurzhub-Hydraulikzylindern vorgesehen, wobei die Hydraulikzylinder bei der Verriegelung nur einen Hubweg von ca. 50 mm zurücklegen. Bei diesem bekannten Blasformsystem können einerseits die Blasformhälften synchron gegeneinander verfahren werden, indem die Antriebsaggregate entsprechend gesteuert werden und es ist auch eine asynchrone Bewegung der Blasformhälften möglich, wobei die verschiedenen Antriebsaggregate unterschiedliche Steuerbefehle erhalten.

Das aus der DE 197 47 698 C2 bekannte Blasformsystem ist gemäß einer bevorzugten Variante für eine Zwei- oder Mehrstationen-Blasformmaschine vorgesehen, bei der nur drei Formträgerplatten vorhanden sind, so dass die mittlere Formträgerplatte an der einen Seite eine Blasformhälfte einer ersten Blasformstation hält und an der anderen Seite eine Blasformhälfte einer zweiten Blasformstation hält. Hier wird die Blasform der ersten Station geschlossen und die gesamte gekoppelte Einheit beider Stationen wird soweit verfahren, bis sich die Blasform der zweiten ebenfalls geschlossenen Station in einer Aufnahmeposition unter dem Extruder befindet. Erst dann werden die beiden Blasformhälften der zweiten Station entriegelt und beide Blasformhälften werden geöffnet, indem sie synchron auseinander fahren. Für eine der beiden Blasformhälften wird dabei ein Antrieb an dem äußeren Lagerbock der ersten Station genutzt, der somit für beide Blasformstationen vorgesehen ist. Nach dem Öffnen der zweiten Blasform wird der fertige Artikel entnommen und erst dann kann in dieser Blasformstation ein neuer Vorformling aufgenommen werden.

Bei dem aus der DE 197 47 698 C2 bekannten Blasformsystem greift im Falle einer Einstationen-Blasformmaschine der erste Antrieb an dem Lagerbock an, an dem die linke Blasformhälfte montiert ist und der zweite Antrieb greift an einem zweiten Lagerbock an, an dem die rechte Blasformhälfte montiert ist. Beide Spindelantriebe wirken somit nur jeweils auf eine Schließenhälfte der Blasform. Beide Spindelantriebe befinden sich zudem in einem Bereich unterhalb der Lagerböcke, was für eine Krafteinleitung in die gegeneinander verfahrenden Formträgerplatten und Blasformhälften vergleichsweise ungünstig ist.

Die Aufgabe der vorliegenden Erfindung besteht darin, ein verbessertes Blasformsystem der eingangs genannten Art zur Verfügung zu stellen, welches mehr Freiheitsgrade bei den Bewegungsabläufen der Schließenhälften/Formhälften aufweist und dadurch die Herstellung komplexer Hohlkörper ermöglicht.

Ein weiteres Anliegen der vorliegenden Erfindung besteht darin, die Zykluszeit gegenüber herkömmlichen Blasformverfahren zu verkürzen.

Die Lösung dieser Aufgabe liefert ein Blasformsystem zur Herstellung thermoplastischer Hohlkörper der eingangs genannten Gattung mit den kennzeichnenden Merkmalen des Hauptanspruchs.

Erfindungsgemäß ist vorgesehen, dass die Antriebskombination eine erste an nur einer der Schließenhälften der Blasformeinrichtung angreifende Antriebseinrichtung umfasst, mittels derer beide Schließenhälften auf dem Maschinenrahmen, auf dem sie montiert sind, gemeinsam linear in gleicher Richtung verfahrbar sind.

Aufgrund der spezifischen Merkmale der erfindungsgemäßen Antriebskombination sind folgende Bewegungsabläufe möglich. Jede der beiden Formhälften einer Blasformeinrichtung ist jeweils unabhängig voneinander relativ zu der jeweils anderen Formhälfte verfahrbar, während dabei die jeweils andere Formhälfte der gleichen Blasformeinrichtung feststeht. Beide Blasformhälften können gemeinsam in gleicher Richtung verfahren werden, und zwar sowohl im geöffneten als auch im geschlossenen Zustand der Blasform. Die Blasformhälften können rasch symmetrisch auseinander gefahren werden, zum Öffnen der Blasform und sie können rasch symmetrisch aufeinander zu gefahren werden beim Schließen der Blasform unter Aufbringung der Schließkraft im letzten Teil des Hubwegs ohne die Notwendigkeit zeitaufwändiger zusätzlicher Operationen. Im Gegensatz zu einigen zuvor beschriebenen bekannten Blasformsystem müssen bei diesen Verfahroperationen nur vergleichsweise geringe Massen bewegt werden, insbesondere nur eine oder beide Schließenhälften der jeweils arbeitenden Blasformstation.

Es ist außerdem nicht jeweils eine der beiden Blasformhälften einer Blasformstation feststehend, sondern beide Blasformhälften können jeweils unabhängig voneinander gegenüber der jeweils anderen Hälfte verfahren werden, unter Beibehaltung der übrigen Verfahr-Möglichkeiten. Dadurch ergeben sich vielfältigere Möglichkeiten für das Verfahren der Blasformhälften in asymmetrische Positionen.

Bei dem aus der DE 44 03 698 A1 bekannten Blasformsystem lässt die Kolben-Zylinder-Einheit nur die erste Funktion zu, nämlich ein symmetrisches Verfahren der beiden Blasformhälften gegeneinander. Die dritte Funktion ist im Sinne der vorliegenden Erfindung bei diesem bekannten Blasformsystem ebenfalls nicht möglich, denn die geschlossene Blasform kann nicht durch das Antriebssystem auf dem Schlitten verfahren werden. Dazu verfährt vielmehr der gesamte Schlitten. Dies erfolgt auch nicht während des Ladevorgangs, also der Übernahme des Vorformlings am Extruderkopf, sondern es dient dazu, die gesamte Blasformeinheit aus dem Bereich des Extruders heraus zu fahren, um die zweite Blasformeinheit im Bereich des Extruders zu platzieren. Somit ist eine lineare Verschiebung der relativen Position des Schließensystems während der Ladephase, beispielsweise für eine weitere Operation an dem bereits aufgenommenen Vorformling, hier weder möglich noch vorgesehen. Die zweite Funktion, nämlich ein asymmetrisches Verfahren lediglich einer der Formhälften relativ zu der anderen Formhälfte, welche ihre Position beibehält, ist bei diesem bekannten Blasformsystem ebenfalls nicht möglich. Diese Funktion verschafft dem Blasformsystem jedoch weitere Freiheitsgrade, ermöglicht beispielsweise die Entnahme des geblasenen Hohlkörpers in der Nähe des Extruderkopfs und lässt daher kürzere Arbeitszyklen zu. Beispielsweise kann eine zentrale Artikelausgabe nach dem Blasformvorgang vorgesehen sein.

Bei dem aus der DE 197 47 698 C2 bekannten System wird im Gegensatz zur vorliegenden Erfindung ein Antriebssystem benutzt, bei dem ein erster Antrieb nur an einer Schließenhälfte angreift und ein zweiter Antrieb nur an der zweiten Schließenhälfte angreift, wobei sich beide Antriebe in einer Ebene unterhalb der Formaufspannplatten befinden. Ein unmittelbares Zusammenwirken dieser Antriebe mit dem für die Verriegelung verwendeten hydraulischen System beim Schließen der Blasform ist hier nicht vorgesehen.

Bei der erfindungsgemäßen Lösung ist das Verfahren beider Schließenhälften in gleicher Richtung mittels nur der ersten Antriebseinrichtung deshalb möglich, weil die zweite Antriebseinrichtung bei dieser Operation quasi die Schließenhälften miteinander koppelt.

Gemäß einer bevorzugten Weiterbildung der Aufgabenlösung ist eine zweite an beiden Schließenhälften der Blasformeinrichtung angreifende Antriebseinrichtung vorgesehen und mittels dieser Antriebseinrichtung oder der Kombination beider Antriebseinrichtungen sind beide Schließenhälften zum Öffnen oder Schließen der Blasform gleichzeitig auf dem Maschinenrahmen symmetrisch oder asymmetrisch linear gegeneinander verfahrbar. Es arbeiten also bei diesen Operationen eine nur an einer Schließenhälfte einwirkende Antriebseinrichtung, die sich beispielsweise unterhalb der Ebene der Schließenhälften befinden kann und eine an beiden Schließenhälften angreifende Antriebseinrichtung zusammen, die sich beispielsweise etwa in einer Höhe innerhalb des Umrissbereichs der beiden Schließenhälften befindet, bevorzugt etwa in Höhe der beiden Blasformhälften, wodurch sich günstigere Kräfteverhältnisse ergeben.

Bevorzugt ist es also so, dass die zweite an beiden Schließenhälften angreifende Antriebseinrichtung sich in vertikaler Richtung gesehen in Höhe der beiden Formhälften der Blasform erstreckt und beide Schließenhälften in Höhe der Blasform und/oder der Formaufspannplatten miteinander verbindet.

Bei der erfindungsgemäßen Lösung haben die Schließ-Systemplatten, wo die Formhälften der Blasform aufgespannt werden (Formaufspannplatten) durch die zweite Antriebseinrichtung eine feste Verbindung untereinander und müssen nicht im Bewegungsablauf eingekuppelt werden. Dies ist ein großer Vorteil, wodurch man schnelle Bewegungen erreichen kann und dadurch geringere Maschinen-Totzeiten auftreten. Die Schließeinheiten können beispielsweise diagonal über Spindelantriebe und Kurzhubelemente eine feste Verbindung aufweisen, so dass auch schnelle Formbewegungen gefahren werden können. Zusätzlich können über Kurzhubzylinder zeitgleich hohe Schließkräfte aufgebracht werden.

Es ist weiterhin eine Artikelentnahme und das gleichzeitige Füllen mit einem neuen Vorformling in die gleiche Blasform in der gleichen Schließeinheit möglich. Es können beispielsweise auch je nach Zyklus mehrere Schließeinheiten nacheinander gefüllt werden und es kann jeweils unter Kopf eine Artikelentnahme durchgeführt werden.

Man kann auch beispielsweise bei der Operation des Öffnens der Blasform bereits eine Schließenhälfte in eine gewünschte asymmetrische Position bringen, beispielsweise, wenn dies für die Entnahme des geblasenen Hohlköpers oder für eine zusätzliche Verformungsoperation am Hohlkörper notwendig ist. Es überlagern sich dabei mehrere Bewegungen und folglich wird der Arbeitszyklus damit verkürzt.

Grundsätzlich ist im Rahmen der Erfindung alternativ auch eine Ausführung als Schließhebelkonstruktion möglich.

Man kann bei einer erfindungsgemäßen Antriebskombination die Verfahrwege beider Antriebseinrichtungen überlagern, das heißt beispielsweise beide Antriebe gleichzeitig betreiben. Durch gleichzeitiges Betreiben beider Antriebseinrichtungen der Antriebskombination ist es möglich nur eine der Schließenhälften asymmetrisch gegenüber der anderen Schließenhälfte relativ zu verfahren, wobei die andere Schließenhälfte ihre Position beibehält oder beide Schließenhälften aufeinander zu zu bewegen, je nach Art und Anordnung der verwendeten Antriebe. Diese Vorgänge können erfolgen, wenn sich die Blasformeinheit in oder nahe an der Ladeposition und somit in Nähe des Extruderkopfs befindet. Die Blasformeinheit wird also nicht vollständig aus dem Arbeitsbereich des Extruders herausbewegt und kann folglich Operationen durchführen, bei denen der Extruderkopf aktiv ist. Die Wege, um erneut in eine Ladeposition zur Aufnahme eines Vorformlings zu fahren sind sehr kurz. Der Maschinenrahmen verfährt dabei nicht, sondern es verfahren immer nur entweder eine oder beide Schließenhälften auf dem Maschinenrahmen. Damit sind auch die zu bewegenden Massen bei diesen Verfahr-Operationen geringer.

Durch gleichzeitiges Betreiben beider Antriebe ist es beispielsweise auch möglich, das Schließen der Blasform zu bewirken, wobei mittels des einen Antriebs die erste Blasformhälfte relativ auf die zweite zu bewegt wird und mittels des zweiten Antriebs gleichzeitig die zweite Blasformhälfte auf die erste zu fährt. Vorteilhaft ist dabei, dass dadurch, dass beide Blasformhälften unabhängig voneinander verfahrbar sind, diese Operation erfolgen kann, ohne den Schlitten zu verfahren.

Gemäß einer bevorzugten Weiterbildung der Erfindung kann man für die erste und/oder die zweite Antriebseinrichtung einen hydraulischen Antrieb oder einen Spindelantrieb oder jeweils eine Kombination aus einem hydraulischen und einem Spindelantrieb verwenden. Bevorzugt umfasst die zweite Antriebseinrichtung einen schnell laufenden Spindelantrieb mit vergleichsweise großem Hub oder eine Kombination aus einem kurzhubigen hydraulischen Antrieb und einem solchen Spindelantrieb.

Ein weiterer Vorteil gegenüber dem Stand der Technik gemäß DE 199 27 138 C2 liegt darin, dass erfindungsgemäß mittels der Antriebskombination sowohl die Verfahrwege der Schließenhälften zurückgelegt werden als auch die Aufbringung der Schließkraft nach dem Schließen der Blasform bewirkt wird. Dazu sind bevorzugt wenigstens ein Spindelantrieb und wenigstens ein hydraulischer Antrieb, mittels dessen die Schließkraft aufgebracht wird, achsgleich oder achsparallel montiert und in Höhe der Blasformhälften angeordnet, so dass in der Achse dieser Antriebskombination sowohl das (schnelle) Verfahren als auch die Krafteinleitung erfolgen.

Eine Weiterbildung der Erfindung sieht vor, dass das Blasformsystem weiterhin eine Kalibriervorrichtung für den herzustellenden Hohlkörper umfasst und eine dieser zugeordnete von den Antriebseinrichtungen für die Schließenhälften unabhängige und nicht auf der gleichen Achse verfahrende Antriebseinrichtung vorgesehen ist, mittels derer die Kalibriervorrichtung synchron mit wenigstens einer der Schließenhälften/Formhälften und unabhängig von den Schließenhälften linear verfahrbar ist. Dadurch ergibt sich der weitere Vorteil, dass man Bereiche des herzustellenden Hohlkörpers kalibrieren kann und während dieses Kalibriervorgangs eine der genannten Verfahroperationen vornimmt. Dies lässt eine Verkürzung des Arbeitszyklus zu. Die genannte Kalibriervorrichtung kann im Bereich des Blasdorns liegen und somit mit diesem Verfahren. Es handelt sich somit um eine kombinierte Einrichtung mittels derer der Blasvorgang und ein Kalibriervorgang erfolgen können.

Man kann beispielsweise die Kalibriervorrichtung synchron mit nur einer der Schließenhälften/Formhälften linear verfahrbar ausbilden, so dass die Kalibriervorrichtung bei geöffneter Blasform synchron mit der einen Schließenhälfte in eine andere Position fahren kann, während die andere Schließenhälfte ihre Position beibehält. Man kann beispielsweise auch die Kalibriervorrichtung synchron mit beiden Schließenhälften/Formhälften gegenüber dem Maschinenrahmen linear verfahrbar ausbilden, um beispielsweise bei geschlossener Blasform diese zu Verfahren und gleichzeitig zu Kalibrieren.

Beispielsweise kann die Kalibriervorrichtung wenigstens einen Dorn umfassen, welcher in Richtung senkrecht zur Verfahrrichtung der beiden Formhälften beim Öffnen/Schließen der Blasform zwischen die beiden Formhälften einfahrbar ist, um auf diese Weise z.B. einen Stutzen oder eine Öffnung des Hohlkörpers zu kalibrieren. Dies ist beispielsweise dann erforderlich, wenn diese Öffnung später ein weiteres Bauteil aufnimmt, so dass eine hohe Maßgenauigkeit gefordert ist.

Das erfindungsgemäße Blasformsystem kann eine oder mehrere Blasformstationen mit jeweils zwei Schließenhälften umfassen. Bei Verwendung einer Blasformstation wird diese stationär unter dem Extruderkopf angeordnet. Wenn gemäß einer bevorzugten Weiterbildung der vorliegenden Erfindung zwei oder mehrere dieser Blasformstationen vorgesehen sind, dann kann jede dieser Blasformstationen auf ihrem jeweiligen Maschinenrahmen mittels eines Antriebs entlang einer Führung in eine Position unter dem Extruderkopf verfahren werden, im rechten Winkel zur Verfahrrichtung der Schließenhälften beim Schließen der Blasform. Anders als im Stand der Technik erfolgt somit der Wechsel von einer auf die andere Blasformstation durch ein Verfahren des jeweiligen Maschinenrahmens quer zur Verfahrrichtung der Blasformhäften beim Schließen oder Öffnen der Blasform. Je nach Anforderung ist auch ein Blasformsystem mit einer stationären nicht verfahrbaren Blasformstation möglich.

Gegenstand der vorliegenden Erfindung ist weiterhin ein Blasformverfahren zur Herstellung von Hohlkörpern, bei dem die beiden die Formhälften der Blasformeinrichtung tragenden Schließenhälften zwecks Öffnen bzw. Schließen der Blasform gegeneinander verfahrbar sind, insbesondere unter Verwendung eines Blasformsystems der zuvor genannten Art, welches wenigstens einen Schritt umfasst, in dem bei geöffneten Schließenhälften die Entnahme des geblasenen Hohlkörpers erfolgt, während sich die Blasdornvorrichtung in Position unter dem Extruderkopf befindet und gleichzeitig einen Vorformling für den nächsten Blasvorgang aufnimmt. Eine solche Verfahrensweise wird dadurch möglich, dass beide Schließenhälften voneinander unabhängig verfahren werden können und damit asymmetrische Öffnungspositionen möglich sind, die genügend Raum für eine Artikelentnahme zulassen, während bereits wieder der nächste Vorformling für den neuen Blasvorgang aufgenommen wird. Dies ist ein wesentlicher Vorteil, der die Zykluszeit verkürzt. Dagegen ist im Stand der Technik die Artikelentnahmestation zugleich auch die Position unter dem Extruderkopf für die Aufnahme des neuen Vorformlings. Der Zyklus verlängert sich daher bei dem bekannten System, da der neue Vorformling erst aufgenommen werden kann, nachdem der zuvor geblasene Hohlkörper entnommen wurde.

Das erfindungsgemäße Blasformverfahren umfasst insbesondere wenigstens einen Schritt, in dem eine in den Formhohlraum hinein ragende Kalibriervorrichtung für den herzustellenden Hohlkörper bei geschlossenen Schließenhälften mittels einer dieser zugeordneten Antriebseinrichtung synchron mit wenigstens einer der Schließenhälften/Formhälften linear verfährt.

Das erfindungsgemäße Blasformverfahren kann beispielsweise auch zwei Schrittte umfassen, in denen jeweils bei geöffneten Schließenhälften der Blasformeinrichtung nur eine Schließenhälfte gegenüber der anderen Schließenhälfte linear verfährt, während die andere Schließenhälfte ihre Position beibehält. Vorteilhaft ist insbesondere, dass beide Schließenhälften voneinander unabhängig jeweils gegenüber der jeweils anderen Schließenhälfte verfahren werden können, ohne dass dabei große Massen bewegt werden müssen.

Die für das erfindungsgemäße Verfahren verwendete Antriebskombinationen lässt auch Operationen zu, bei denen die beiden Schließenhälften beim Öffnen der Blasform linear auseinander fahren und dabei einen unterschiedlichen Verfahrweg zurücklegen (asymmetrisches Öffnen der Blasform.) Dadurch kann man bei der Operation des Öffnens der Blasform bereits eine der Schließenhälften in eine gewünschte asymmetrische Position bringen, beispielsweise, wenn dies für die Entnahme des geblasenen Hohlkörpers oder für eine zusätzliche Verformungsoperation am Hohlkörper notwendig ist. Es überlagern sich dabei mehrere Bewegungen und folglich wird der Arbeitszyklus damit verkürzt.

Ein hier nur beispielhaft genannter Ablauf eines Blasformverfahrens, welches mit dem erfindungsgemäßen Blasformsystem durchgeführt werden kann, sieht die nachfolgenden Schritte vor:
- beide Schließenhälften verfahren nach dem Schließen der Blasform zusammen mit einer in den Formhohlraum ragenden Kalibriervorrichtung aus einer Position, in der sich die Blasform unter dem Extruderkopf befindet, in eine vom Extruderkopf entfernte Position;
- nach dem Blasvorgang fahren die beiden Schließenhälften auseinander und die Form wird geöffnet, wobei die Kalibriervorrichtung hier als Entformungshilfe dienen kann und sicher stellt, dass der komplette Artikel in einer Formhälfte verbleibt und die Kalibriervorrichtung anschließend wieder in eine Position unter dem Extruderkopf fährt;
- der geblasene Hohlkörper wird aus der asymmetrisch geöffneten Schließeinheit entnommen, während gleichzeitig der neue Vorformling ausgestoßen werden kann;
- eine der Schließenhälften verfährt, während die andere Schließenhälfte ihre Position beibehält, die Schließeneinrichtung ist nun symmetrisch zum Extruderkopf geöffnet
und ein neuer Blasformvorgang kann sich anschließen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Seitenansicht eines Ausschnitts aus einem erfindungsgemäßen Blasformsystem im teilweisen Schnitt;
Figur 2 eine schematisch vereinfachte Seitenansicht einer erfindungsgemäßen Blasformstation in der geöffneten Grundstellung mit der Funktion "Ausstoßen des Vorformlings";
Figur 3 eine ähnliche schematisch vereinfachte Seitenansicht der Blasformstation von Figur 2 in der Stellung mit geschlossener Blasform;
Figur 4 eine ähnliche schematisch vereinfachte Seitenansicht der Blasformstation von Figur 3 in einer anderen Phase des Verfahrens;
Figur 5 eine ähnliche schematisch vereinfachte Seitenansicht der Blasformstation gemäß den Figuren 2 bis 4 in einer anderen Phase des Verfahrens;
Figur 6 eine ähnliche schematisch vereinfachte Seitenansicht der Blasformstation gemäß den Figuren 2 bis 5 in einer anderen Phase des Verfahrens;
Figur 7 eine ähnliche schematisch vereinfachte Seitenansicht der Blasformstation gemäß den Figuren 2 bis 6 in einer anderen Phase des Verfahrens;
Figur 8 eine ähnliche schematisch vereinfachte Seitenansicht der Blasformstation gemäß den Figuren 2 bis 7 in einer anderen Phase des Verfahrens (Position der Artikelentnahme);
Figur 9 eine schematisch vereinfachte Seitenansicht eines beispielhaften erfindungsgemäßen Blasformsystems mit zwei Blasformstationen;
Figur 10 eine Draufsicht auf das Blasformsystem mit zwei Blasformstationen gemäß Figur 9.

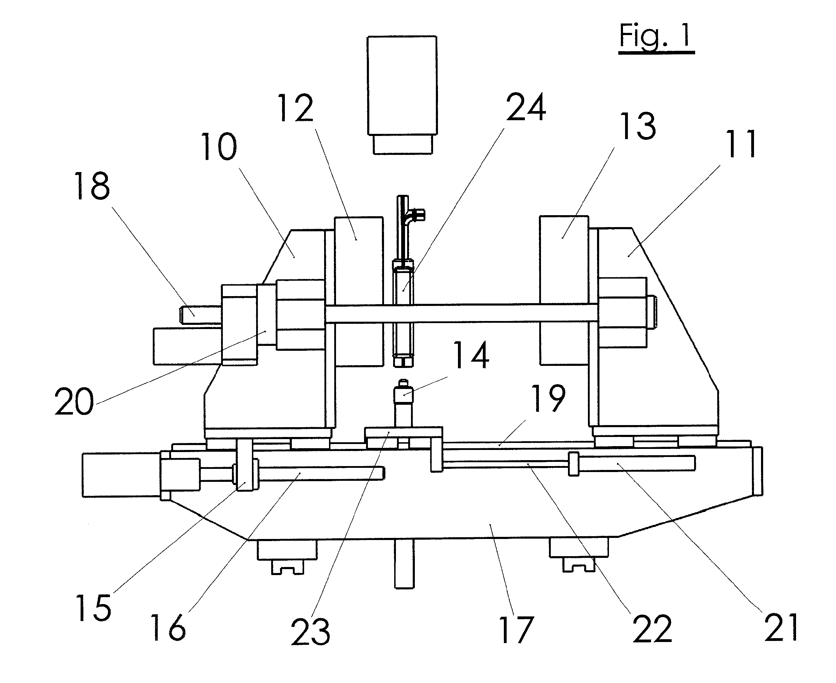

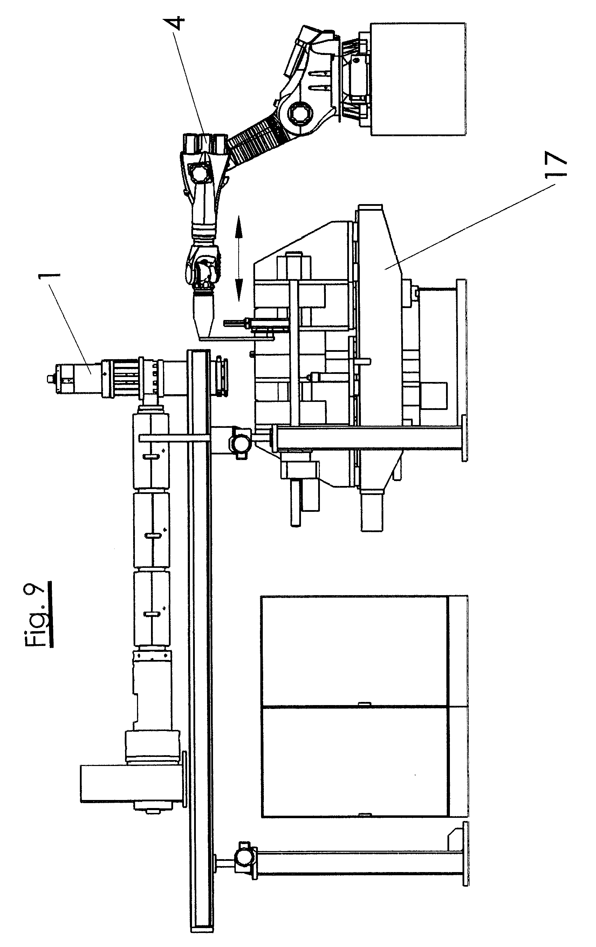

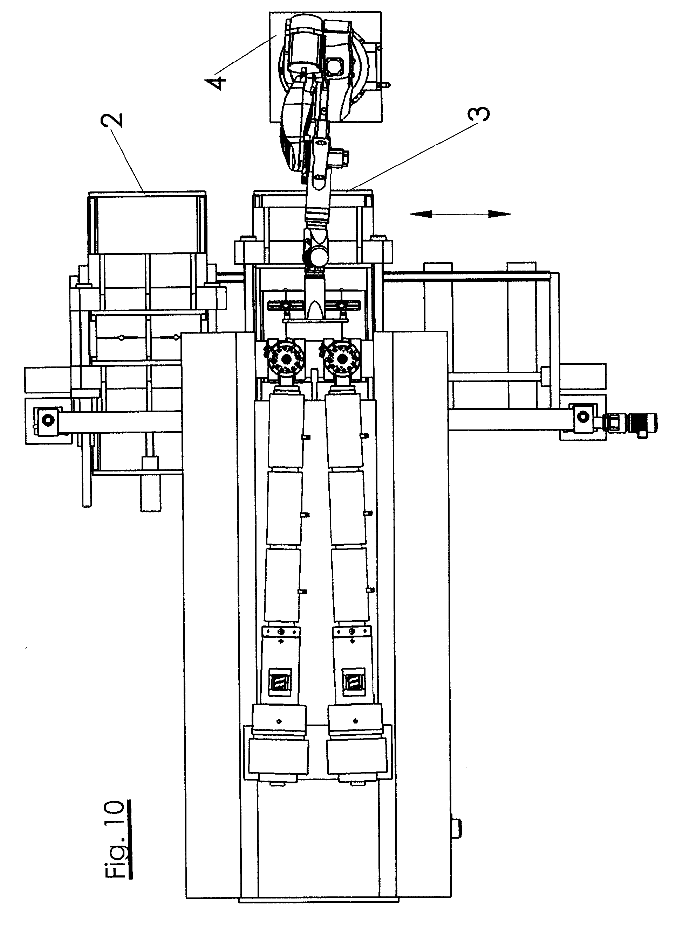

Zunächst wird auf die Figuren 9 und 10 Bezug genommen und anhand dieser wird der generelle Aufbau eines beispielhaften Blasformsystems gemäß der vorliegenden Erfindung beschrieben, welches zwei Blasformstationen aufweist. Es ist ein Extruder mit Extruderkopf 1 dargestellt, welcher den Schlauch (Vorformling) ausstößt, der dann in einer der beiden Blasformstationen zum Hohlkörper geblasen wird. In Figur 10 sind die beiden Blasformstationen 2 und 3 erkennbar, die hier nebeneinander und in Figur 9 in der Zeichenebene hintereinander liegen. In Figur 10 befindet sich die Blasformstation 3 in der zentralen Position unter dem Extruderkopf, in der der Vorformling aufgenommen werden kann. Die zweite Blasformstation 2 wurde in eine seitliche Position verfahren, in der der Artikel aufgeblasen werden kann. Jede der Blasformstationen 2, 3 ist jeweils auf einem Maschinenrahmen 17 angeordnet und auf diesem mittels eines Antriebs entlang einer Führung (zum Beispiel auf Schienen) in Richtung des Doppelpfeils in Figur 10 verfahrbar. Jede der beiden Blasformstationen weist jeweils auf ihrem Maschinenrahmen 17 jeweils die beiden Schließenhälften mit den Blasformhälften auf, die zum Öffnen bzw. Schließen der Blasform über entsprechende Antriebe gegeneinander verfahrbar sind, wie später noch unter Bezugnahme auf die Figuren 1 bis 8 im Detail näher erläutert wird. In Figur 9 ist die vordere Blasformstation 3 in einer asymmetrisch geöffneten Position der beiden Schließenhälften dargestellt, so dass man die eine (rechte) Schließenhälfte der dahinter liegenden Blasformstation 2 erkennen kann, während die jeweils linken Schließenhälften beider Blasformstationen in Figur 9 hintereinander liegen, so dass die hintere linke Schließenhälfte durch die vordere linke Schließenhälfte der Blasformstation 3 verdeckt wird. Beim Öffnen und Schließen der Blasform ist die Verfahrrichtung der jeweiligen Schließenhälften der Blasformstation auf dem jeweiligen Maschinenrahmen 17 jeweils in Richtung der Doppelpfeile in Figur 9 und somit senkrecht (quer) zur Verfahrrichtung der Blasformstationen 2 und 3 mit dem Maschinenrahmen beim Wechsel von der einen auf die andere Blasformstation.

In den Figuren 9 und 10 ist weiterhin ein Roboter 4 dargestellt, der den geblasenen Hohlkörper aus der Blasform entnimmt. Wie man insbesondere in Figur 9 erkennt, kann dieser Roboter 4 von oben her über die rechte Schließenhälfte hinweg in die geöffnete Blasform eingreifen, um den geblasenen Artikel zu entnehmen, obwohl sich der Extruderkopf des Extruders bereits wieder in einer Position über dem Raum zwischen den beiden Blasformhälften befindet, so dass der neue Vorformling für den nächsten Blasvorgang ausgestoßen werden kann, noch während der Roboter den fertig geblasenen Artikel entnimmt. Die ist durch das weite asymmetrische Auffahren der Blasform möglich, da damit der geblasene Artikel in eine vom Extruderkopf entfernte Position außerhalb dessen Arbeitsbereichs gelangt. Der Artikel kann beim Verfahren einer der Schließenhälften nach außen in Richtung des Pfeils von Figur 9 noch in der Blasform gehalten werden oder zunächst durch den Blasdorn gehalten werden, der dann nach unten aus dem Artikel herausfährt und über einen eigenen Antrieb ohne die rechte Schließenhälfte seitlich in Figur 9 nach links zurück fahren kann in die Position unter dem Extruderkopf, so dass der Blasdorn dort den neuen Vorformling aufnehmen kann.

Nachfolgend wird auf die Figur 1 Bezug genommen und anhand dieser wird der Aufbau einer der beiden Blasformstationen näher im Detail erläutert. Die Darstellung zeigt eine schematisch vereinfachte Seitenansicht einer der Blasformstationen des erfindungsgemäße Blasformsystems in vergrößertem Maßstab im teilweisen Schnitt. Man erkennt die beiden Schließenhälften 10, 11, an deren innenseitigen vertikalen Flächen sich jeweils die Tragplatten für die beiden Formhälften 12, 13 der Blasform befinden und wobei eine Position des Blasformsystems in einem asymmetrisch geöffneten Zustand dargestellt ist. Zwischen den beiden Formhälften befindet sich die Kalibriervorrichtung mit einem Kalibrierdorn 14, welcher sich von unten nach oben hin erstreckt und in den Raum zwischen den beiden Formhälften ragt.

Die erfindungsgemäße Antriebskombination umfasst einen ersten Antrieb, welcher unterseitig an einer Strebe 15 der linken Schließenhälfte 10 angreift und beispielsweise eine Spindel 16 aufweist, so dass die linke Schließenhälfte 10 auf diese Weise über eine Spindelmutter durch Rotation der Spindel 16 linear in Längsrichtung (in der Zeichnung nach rechts oder links) auf dem Maschinenrahmen 17, auf dem das Blasformsystem montiert ist, verfahrbar ist. Die Antriebskombination umfasst außerdem einen zweiten Antrieb, welcher aus mindestens einer, vorzugsweise aus zwei Spindeln 18 besteht, welche jeweils links und rechts an den Schließenhälften 10, 11 angeordnet sind und sich somit oberhalb der ersten Spindel 16 und parallel zu dieser erstrecken. Durch Antreiben der Spindeln 18 kann man die relative Position der beiden Schließenhälften 10 und 11 zueinander verändern und diese in linearer Bewegung beispielsweise geführt auf Schienen 19 in Längsrichtung auf dem Maschinenrahmen 17 verfahren. Zusätzlich kann der zweite Antrieb auch einen oder mehrere Hydraulikzylinder 20 umfassen, die die Schließeneinrichtung beaufschlagen und deren Hub mit demjenigen der Spindeln 18 kombinieren können, was den Vorteil hat, dass man in rascher Bewegung mittels der Spindel 18 einen vergleichsweise großen Hub zurücklegen kann, um dann anschließend über die Hydraulikzylinder 20 mit einem vergleichsweise kurzen Hub aber mit hoher Kraft die letzte Strecke der Schließbewegung beim Zufahren der Schließe zurückzulegen und somit eine hohe Schließkraft aufzubringen.

Bei Verwendung von je einer Spindelmutter für jede der Schließenhälften 10, 11 kann man bei Drehung der Spindel 18 beide Schließenhälften symmetrisch aufeinander zu fahren, z. B. beim Schließen der Blasform oder voneinander weg fahren, z.B. beim Öffnen der Blasform. Da man die Bewegung des Spindelantriebs der Spindel 18 mit der Bewegung der ersten Spindel 16 überlagern kann, durch zeitgleiches Antreiben beider Spindeln, sind Bewegungsmuster möglich, bei denen sich beispielsweise beide Schließenhälften aufeinander zu bewegen und sich gleichzeitig die Anordnung der Schließe insgesamt auf dem Maschinenrahmen 17 linear in einer Richtung verschiebt. Wenn man hingegen beispielsweise nur die Spindel 18 antreibt, kann man eine Bewegung erzeugen, bei der allein die linke Schließenhälfte 10 linear verfährt, während die rechte Schließenhälfte ihre Position beibehält. Wenn man nur die Spindel 16 antreibt, erhält man eine Bewegung, bei der die Anordnung beider Schließenhälften in einer Richtung auf dem Maschinenrahmen linear verfährt, der Abstand beider Schließenhälften zueinander aber gleich bleibt.

Weiterhin weist das Blasformsystem noch einen separaten Antrieb auf, mittels dessen die Kalibriervorrichtung mit dem Kalibrierdorn 14 in Längsrichtung des Maschinenrahmens 17 linear verfahren werden kann. Dazu ist beispielsweise ein Hydraulikzylinder 21 vorgesehen, dessen ausfahrbare Kolbenstange 22 an einer Halterung 23 der Kalibriervorrichtung unterhalb der Verfahrebene mit den Schienen 19 angreift, auf denen die Schließenhälften 10 und 11 verfahren. Auf diese Weise ist es möglich, durch Ausfahren oder Einfahren der Kolben/Zylinder-Einheit 21, 22 den Kalibrierdorn 14 mit den Schließenhälften zu verfahren. Dies bedeutet, dass das Schließensystem zum Beispiel während das Blasformsystem arbeitet und die Blasform geschlossen ist auf dem Maschinenrahmen 17 verfahren und gleichzeitig eine Kalibrierung stattfinden kann.

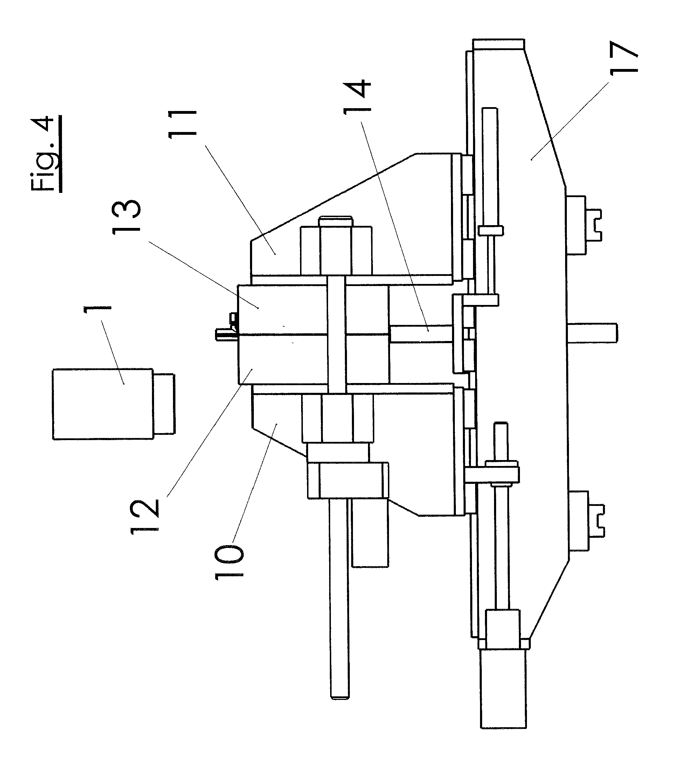

In den Figuren gemäß dem Ausführungsbeispiel ist eine Kalibrierung mit einem Kalibrierdorn 14 von unten her gezeigt. Man kann aber bei dem erfindungsgemäßen Blasformsystem auch von oben her kalibrieren und von oben her eine Kalibriervorrichtung in die Blasform einfahren, was bei bekannten Systemen bislang nicht möglich ist. Dies ist dadurch erfindungsgemäß möglich, dass die Blasform in eine Position fahren kann, wie sie beispielsweise in Figur 4 gezeigt ist, in der die Blasform nicht unter dem Extruderkopf steht, so dass oberhalb der Blasform Freiraum ist und eine Kalibriervorrichtung auch von oben her operieren kann. Ein derartiges Blasformsystem ist ebenfalls von der vorliegenden Erfindung erfasst.

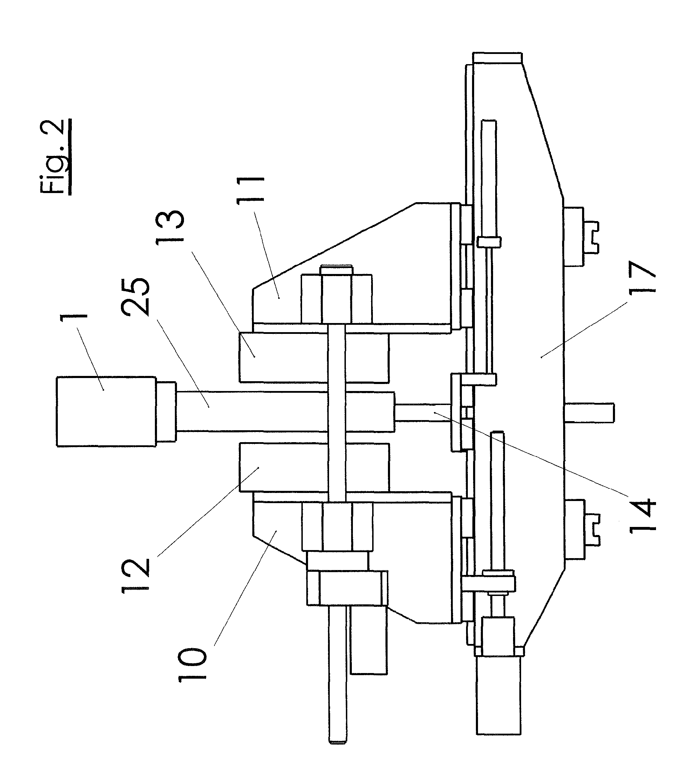

Nachfolgend werden anhand der Figuren 2 bis 8 beispielhafte Bewegungsabläufe bei Verwendung eines erfindungsgemäßen Blasformsystems erläutert. Figur 2 zeigt wiederum schematisch vereinfacht ein erfindungsgemäßes Blasformsystem in der geöffneten Grundstellung, in der ein schlauchartiger Vorformling 25 aus dem Extruderkopf 1 ausgestoßen wird. Die beiden Schließenhälften 10 und 11 sind symmetrisch zum Blasdorn und Kalibrierdorn 14 auseinander gefahren und die beiden Formhälften 12, 13 der Blasform sind geöffnet.

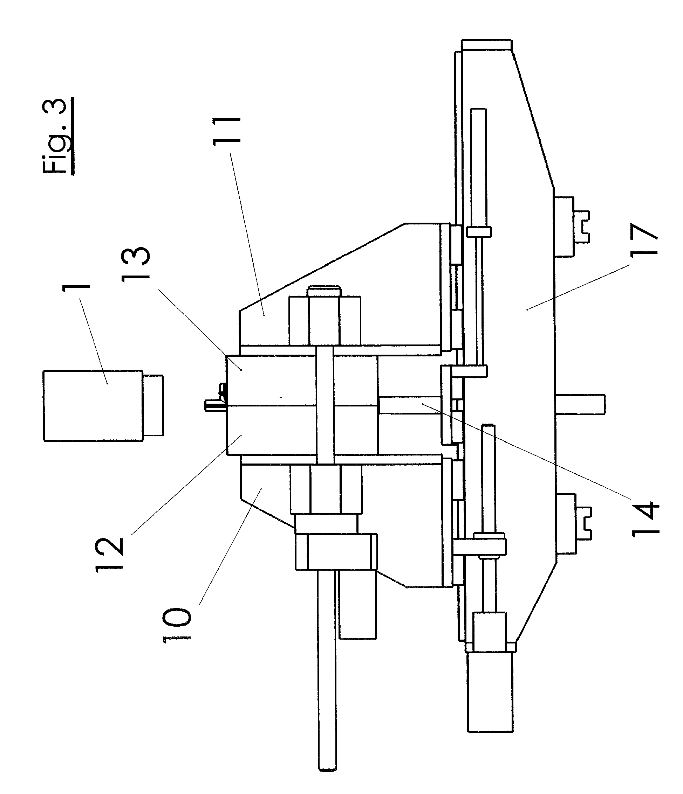

Nach der Aufnahme des Vorformlings werden die beiden Formhälften 12, 13 der Blasform geschlossen, indem die beiden Schließenhälften 10, 11 symmetrisch aufeinander zu fahren. Dieser Zustand ist in Figur 3 dargestellt. Nun kann der Hohlkörper geblasen werden.

Bei noch geschlossener Blasform wird die gesamte Anordnung mit den beiden Schließenhälften 10, 11 und den beiden Formhälften 12, 13, in denen sich noch der Hohlkörper befindet auf dem Maschinenrahmen 17 mittels der Antriebskombination linear verfahren in eine Position gemäß Figur 4, in der sich die mittige Teilungsebene der Blasform nicht mehr unter dem Extruderkopf befindet. Mit der geschlossenen Blasform verfährt der Blasdorn. Ein solches seitliches Verfahren ist beispielsweise dann sinnvoll, wenn der zu formende Hohlkörper im oberen Bereich eine Anformung aufweist, die bei diesem Vorgang verformt wird, beispielsweise, wenn an dem Hohlkörper ein endseitig vorstehender Krümmer anzuformen ist. Ein solcher Hohlkörper kann aufgrund der Komplexität der Form mit den bislang bekannten Blasformverfahren nicht hergestellt werden. Die Details dieser Operation und das dazu verwendete Werkzeug sind in der Figur 4 nicht dargestellt. Diese Ausführungen sollen jedoch dazu dienen zu erläutern, dass bei gewissen Anwendungen ein gemeinsames Verfahren der Anordnung mit geschlossener Blasform auf dem Maschinenrahmen notwendig wird. Die erfindungsgemäße Vorgehensweise hat den Vorteil, dass nur die genannten Bauteile verfahren werden, nicht aber der Maschinenrahmen selbst oder gar eine zweite Blasformstation wie im Stand der Technik. Die zu bewegende Masse ist bei der erfindungsgemäßen Lösung wesentlich geringer.

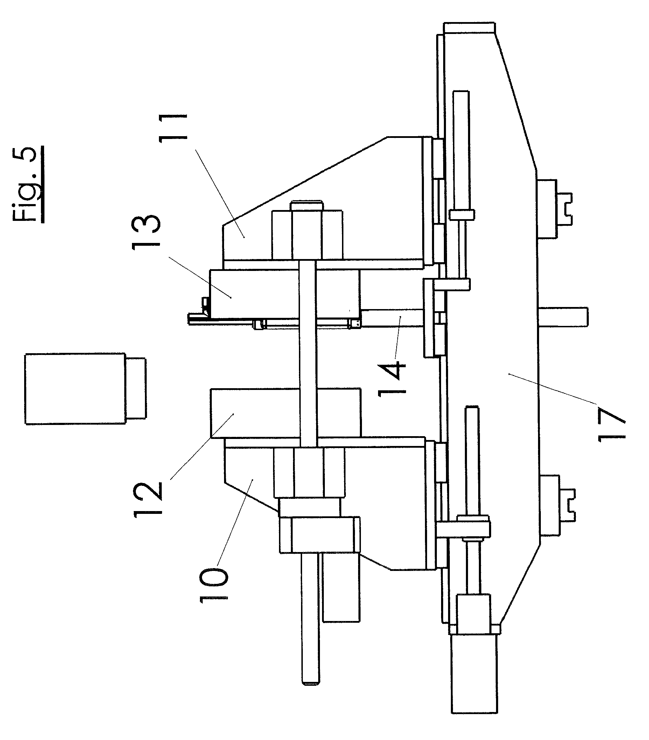

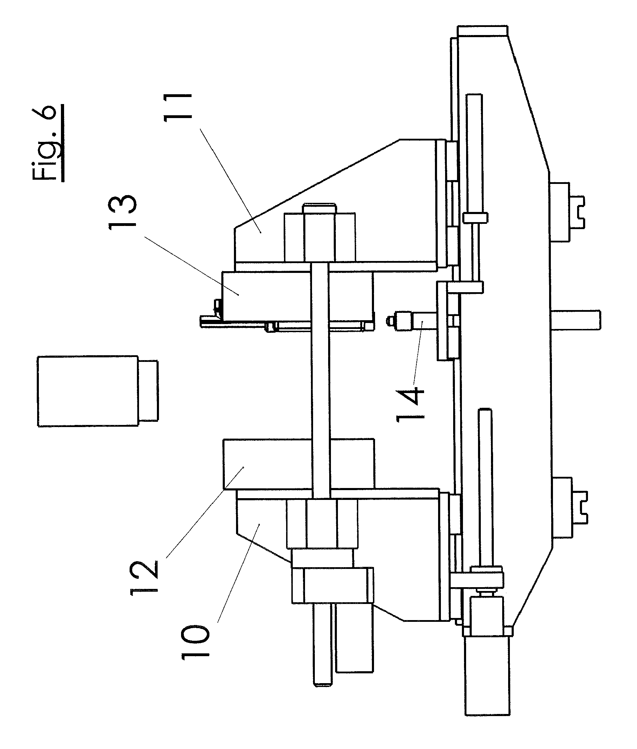

Ausgehend von der Position gemäß Figur 4 wird die Blasform nun geöffnet, wobei aber nicht beide Blasformhälften verfahren, sondern die rechte Blasformhälfte ihre Position beibehält und nur die linke Schließenhälfte 10 mit der Blasformhälfte 12 verfährt, während auch der Blasdorn 14 in seiner Position verbleibt. Diese Position ist in Figur 5 dargestellt. Der geblasene Hohlkörper befindet sich noch in der rechten Blasformhälfte 13. Der Blasdorn 14 kann jetzt nach unten hin aus der Form ausgefahren werden, in die in Figur 6 dargestellte Position.

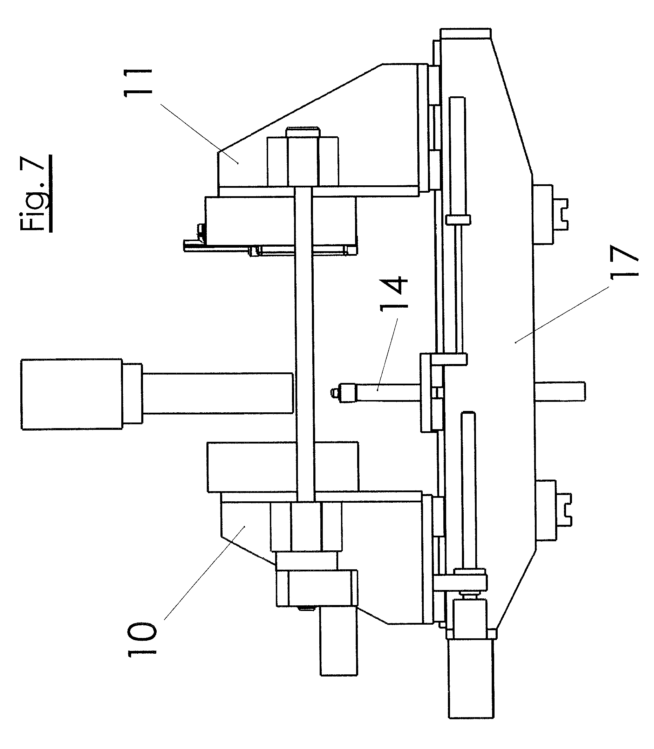

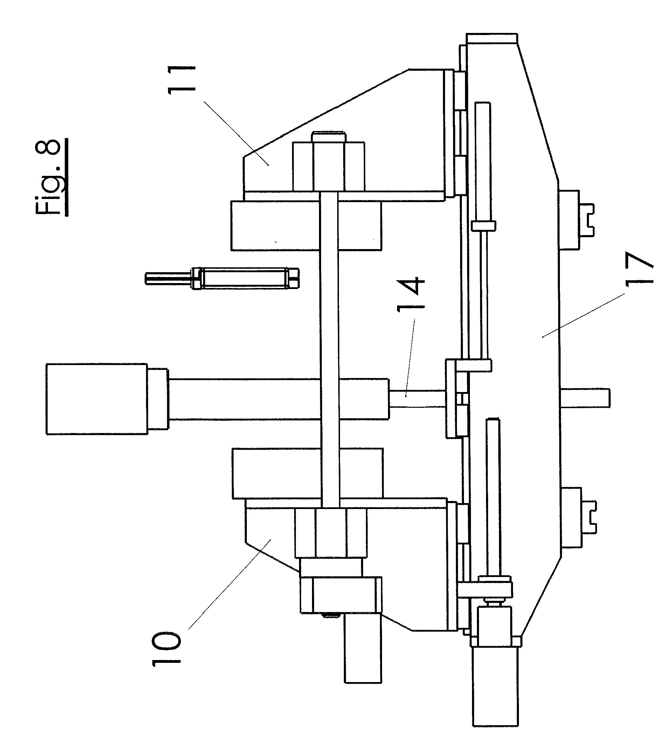

Ausgehend von der in Figur 6 dargestellten Position fährt nun der Blasdorn 14, für den ein eigener unabhängiger Antrieb vorgesehen ist, nach links in eine Position unter dem Extruderkopf 1, so dass bereits erneut ein Vorformling 25 ausgestoßen werden kann, wie dies in Figur 7 gezeigt ist. Die rechte Schließenhälfte 11 verfährt mit der rechten Blasformhälfte 13 nach rechts in eine Außenposition, wodurch der geblasene Hohlkörper 24 entformt wird und dieser dann beispielsweise mittels eines hier nicht dargestellten Roboters entnommen werden kann (siehe Figur 8). Die linke Schließenhälfte 10 behält dabei aber ihre Position bei (siehe Vergleich zwischen Figuren 7 und 8.) Da ausreichender Raum zwischen den beiden Blasformhälften 12, 13 besteht und sich der Blasdorn 14 bereits wieder unter dem Extruderkopf 1 befindet, kann der neue Vorformling 25 ausgestoßen werden, noch während der im vorigen Zyklus geblasene Hohlkörper 24 entnommen wird. Der fertig geblasene Hohlkörper 24 befindet sich bei der Entnahme nicht mehr unter dem Extruderkopf 1. Durch diese Parallelität mehrerer Prozessschritte wird die Gesamtzykluszeit verkürzt.

Der gesamte Prozessablauf umfasst demnach unter anderem einen Schritt, in dem beide Formhälften aufeinander zu fahren (Vergleich der Figuren 2 und 3), einen Schritt, in dem beide Schließenhälften mit der geschlossenen Blasform gemeinsam auf dem Maschinenrahmen 17 verfahren (Vergleich der Figuren 3 und 4), einen Schritt, bei dem nur die linke Schließenhälfte 10 verfährt (Vergleich der Figuren 4 und 5) und einen Schritt bei dem nur die rechte Schließenhälfte 11 verfährt (Vergleich der Figuren 6 und 7). Die Antriebskombination muss daher so ausgelegt sein, dass alle diese Verfahroperationen möglich sind.

### Bezugszeichenliste

- 1: Extruderkopf
- 2: hintere Blasformstation
- 3: vordere Blasformstation
- 4: Roboter
- 10: erste Schließenhälfte
- 11: zweite Schließenhälfte
- 12: erste Formhälfte der Blasform
- 13: zweite Formhälfte der Blasform
- 14: Kalibrierdorn/Blasdorn
- 15: Strebe/Mitnehmer
- 16: erste Spindel
- 17: Maschinenrahmen
- 18: zweite Spindel(n)
- 19: Schienen
- 20: Hydraulikzylinder
- 21: Hydraulikzylinder
- 22: Kolbenstange
- 23: Halterung der Kalibrierung
- 24: Hohlkörper
- 25: Vorformling

## Patentansprüche

1. Blasformsystem zur Herstellung von Hohlkörpern umfassend wenigstens eine Extrudereinrichtung sowie wenigstens eine Blasformeinrichtung, die entweder stationär bei Einsatz einer Blasformeinrichtung, oder bei Einsatz mehrerer Blasformeinrichtungen mittels eines Antriebs entlang einer Führung gegenüber der Extrudereinrichtung linear verfahrbar ist, wobei weiterhin eine Antriebseinrichtung vorgesehen ist, mittels derer die beiden die Formhälften der Blasformeinrichtung tragenden Schließenhälften der Blasformeinrichtung zwecks Öffnen bzw. Schließen der Blasform gegeneinander verfahrbar sind,
wobei eine Antriebskombination umfassend mindestens zwei voneinander unabhängig jeweils für sich oder gemeinsam betätigbare Antriebseinrichtungen (16, 18) vorgesehen ist, mittels derer erstens ein Verfahren der beiden Formhälften der Blasformeinrichtung gegeneinander beim Öffnen oder Schließen der Blasform möglich ist, mittels derer zweitens ein asymmetrisches Verfahren lediglich einer der Formhälften relativ zu der anderen Formhälfte, welche ihre Position beibehält, möglich ist und mittels derer drittens ein gemeinsames Verfahren beider Formhälften in einer Bewegungsrichtung bei geschlossener oder geöffneter Blasform möglich ist,
wobei jede der beiden Formhälften einer Blasformeinrichtung jeweils unabhängig voneinander relativ zu der jeweils anderen Formhälfte verfahrbar ist, während dabei die jeweils andere Formhälfte der gleichen Blasformeinrichtung feststeht,
**dadurch gekennzeichnet, dass** die Antriebskombination eine erste an nur einer der Schließenhälften (10) der Blasformeinrichtung angreifende Antriebseinrichtung (16) umfasst, mittels derer beide Schließenhälften (10, 11) auf dem Maschinenrahmen (17), auf dem sie montiert sind, gemeinsam linear in gleicher Richtung verfahrbar sind.

2. Blasformsystem nach Anspruch 1, **dadurch gekennzeichnet, dass** eine zweite an beiden Schließenhälften (10, 11) der Blasformeinrichtung angreifende Antriebseinrichtung (18) vorgesehen ist und mittels dieser Antriebseinrichtung oder der Kombination beider Antriebseinrichtungen (16, 18) beide Schließenhälften (10, 11) zum Öffnen oder Schließen der Blasform gleichzeitig auf dem Maschinenrahmen symmetrisch oder asymmetrisch linear gegeneinander verfahrbar sind.

3. Blasformsystem nach Anspruch 2, **dadurch gekennzeichnet, dass** die zweite an beiden Schließenhälften angreifende Antriebseinrichtung (18) sich in vertikaler Richtung gesehen in Höhe der beiden Formhälften der Blasform erstreckt und beide Schließenhälften (10, 11) in Höhe der Blasform und/oder der Formaufspannplatten miteinander verbindet.

4. Blasformsystem nach einem der Ansprüche 2 oder 3, **dadurch gekennzeichnet, dass** die zweite Antriebseinrichtung einen schnell laufenden Spindelantrieb (18) mit vergleichsweise großem Hub oder eine Kombination aus einem kurzhubigen hydraulischen Antrieb (20) und einem solchen Spindelantrieb umfasst.

5. Blasformsystem nach einem der Ansprüche 1 bis 4, **dadurch gekennzeichnet, dass** mittels der Antriebskombination mit den Antriebseinrichtungen (16, 18, 20) sowohl die Verfahrwege der Schließenhälften (10, 11) zurückgelegt werden als auch die Aufbringung der Schließkraft bewirkt wird.

6. Blasformsystem nach Anspruch 5, **dadurch gekennzeichnet, dass** wenigstens ein Spindelantrieb (18) und wenigstens ein hydraulischer Antrieb (20), mittels dessen die Schließkraft aufgebracht wird, achsgleich oder achsparallel montiert und jeweils in Höhe der Blasformhälften angeordnet sind.

7. Blasformsystem nach einem der Ansprüche 1 bis 6, **dadurch gekennzeichnet, dass** dieses weiterhin eine Kalibriervorrichtung (14) für den herzustellenden Hohlkörper umfasst und eine dieser zugeordnete von den Antriebseinrichtungen für die Schließenhälften unabhängige und nicht auf der gleichen Achse verfahrende Antriebseinrichtung (21, 22) vorgesehen ist, mittels derer die Kalibriervorrichtung synchron mit wenigstens einer der Schließenhälften/Formhälften und unabhängig von den Schließenhälften (19, 11) linear verfahrbar ist.

8. Blasformsystem nach Anspruch 7, **dadurch gekennzeichnet, dass** die Kalibriervorrichtung (14) sowohl synchron mit nur einer der Schließenhälften (10, 11)/Formhätften als auch synchron mit beiden Schließenhälften/Formhälften gegenüber dem Maschinenrahmen (17) linear verfahrbar ausgebildet ist.

9. Blasformsystem nach einem der Ansprüche 1 bis 8, **dadurch gekennzeichnet, dass** die Kalibriervorrichtung (14) wenigstens einen Dorn umfasst, welcher in Richtung senkrecht zur Verfahrrichtung der beiden Formhälften beim Öffnen/Schließen der Blasform zwischen die beiden Formhälften einfahrbar ist.

10. Blasformsystem nach einem der Ansprüche 1 bis 9, **dadurch gekennzeichnet, dass** dieses mindestens zwei Blasformstationen mit jeweils zwei Schließenhälften umfasst und jede dieser Blasformstationen auf ihrem jeweiligen Maschinenrahmen (17) mittels eines Antriebs entlang einer Führung in eine Position unter dem Extruderkopf verfahrbar ist, im rechten Winkel zur Verfahrrichtung der Schließenhälften (10, 11) beim Schließen der Blasform.

11. Blasformverfahren zur Herstellung von Hohlkörpern, bei dem die beiden die Formhälften der Blasformeinrichtung tragenden Schließenhälften (10, 11) zwecks Öffnen bzw. Schließen der Blasform gegeneinander verfahrbar sind, unter Verwen-dung eines Blasformsystems gemäß einem der Ansprüche 1 bis 8, **dadurch gekennzeichnet, dass** dieses wenigstens einen Schritt umfasst, in dem bei geöffneten Schließenhälften (10, 11) die Entnahme des geblasenen Hohlkörpers erfolgt, während sich die Blasdornvorrichtung in Position unter dem Extruderkopf befindet und gleichzeitig einen Vorformling für den nächsten Blasvorgang aufnimmt.

12. Blasformverfahren nach Anspruch 11, **dadurch gekennzeichnet, dass** dieses wenigstens einen Schritt umfasst, in dem eine in den Formhohlraum hinein ragende Kalibriervorrichtung (14) für den herzustellenden Hohlkörper bei geschlossenen Schließenhälften (10, 11) mittels einer dieser zugeordneten Antriebseinrichtung (21, 22) synchron mit wenigstens einer der Schließenhälften/Formhälften linear verfährt.

13. Blasformverfahren nach Anspruch 11 oder 12, **dadurch gekennzeichnet, dass** dieses wenigstens einen weiteren Schritt umfasst, in dem bei geöffneten Schließenhälften der Blasformeinrichtung nur eine Schließenhälfte (10, 11) gegenüber der anderen Schließenhälfte linear verfährt, während die jeweils andere Schließenhälfte ihre Position beibehält.

14. Blasformverfahren nach einem der Ansprüche 11 bis 13, **dadurch gekennzeichnet, dass** dieses wenigstens einen Schritt umfasst, in dem die beiden Schließenhälften (10, 11) beim Öffnen der Blasform linear auseinander fahren und dabei einen unterschiedlichen Verfahrweg zurücklegen (asymmetrisches Öffnen der Blasform.)

15. Blasformverfahren nach einem der Ansprüche 11 bis 14, **dadurch gekennzeichnet, dass** dieses wenigstens einen Schritt umfasst, in dem eine in den Formhohlraum hinein ragende Kalibriervorrichtung (14) für den herzustellenden Hohlkörper bei geöffneten Schließenhälften (10, 11) mittels einer dieser zugeordneten Antriebseinrichtung synchron mit nur einer der Schließenhälften/Formhälften linear verfährt.

16. Blasformverfahren nach einem der Ansprüche 11 bis 15, **dadurch gekennzeichnet, dass** es mindestens die Abfolge der nachfolgenden Schritte umfasst:
- beide Schließenhälften (10, 11) verfahren nach dem Schließen der Blasform zusammen mit einer in den Formhohlraum ragenden Kalibriervorrichtung (14) aus einer Position, in der sich die Blasform unter dem Extruderkopf befindet, in eine vom Extruderkopf entfernte Position;
- nach dem Blasvorgang fahren die beiden Schließenhälften (10, 11) auseinander und die Form wird geöffnet, wobei die Kalibriervorrichtung (14) wieder in eine Position unter dem Extruderkopf fährt;
- der geblasene Hohlkörper wird entnommen, die Schließeneinrichtung mit den beiden Schließenhälften (10, 11) ist jetzt asymmetrisch geöffnet;
- eine der Schließenhälften verfährt, während die andere Schließenhälfte ihre Position beibehält, die Schließeneinrichtung ist nun symmetrisch geöffnet;
beide Schließenhälften (10, 11) verfahren gegeneinander in die geschlossene Position der Blasform und ein neuer Blasformvorgang kann sich anschließen.

## Claims

1. A blow-moulding system for manufacturing hollow bodies, comprising at least one extruding device, as well as at least one blow-moulding device that is either arranged stationarily when using only one blow-moulding device or can be linearly displaced relative to the extruding device along a guide by means of a drive when using several blow-moulding devices, wherein a driving device is provided, by means of which the two closure halves of the blow-moulding device that carry the mould halves of the blow-moulding device can be displaced relative to one another in order to open or close the blowing mould,
wherein a combination drive comprising at least two driving devices (16, 18), which respectively can be independently actuated individually or jointly, is provided and firstly make it possible to displace the two mould halves of the blow-moulding device relative to one another when the blowing mould is opened or closed, secondly makes it possible to asymmetrically displace only one of the mould halves relative to the other mould half that remains in its position and thirdly makes it possible to jointly displace both mould halves in a moving direction when the blowing mould is opened or closed,
and wherein each of the two mould halves of a blow-moulding device respectively can be independently displaced relative to the other mould half while the other mould half of the same blow-moulding device remains stationary,
**characterized in that** the combination drive comprises a first driving device (16) that engages on only one of the closure halves (10) of the blow-moulding device and makes it possible to jointly and linearly displace both closure halves (10, 11) in the same direction on the machine frame (17), on which they are mounted.

2. The blow-moulding system according to Claim 1, **characterized in that** a second driving device (18) is provided and engages on both closure halves (10, 11) of the blow-moulding device, and **in that** both closure halves (10, 11) can be simultaneously and linearly displaced relative to one another symmetrically or asymmetrically on the machine frame by means of this driving device or the combination of both driving devices (16, 18) in order to open or close the blowing mould.

3. The blow-moulding system according to Claim 2, **characterized in that** the second driving device (18), which engages on both closure halves, extends at the height of the two mould halves of the blowing mould viewed in the vertical direction and connects both closure halves (10, 11) to one another at the height of the blowing mould and/or the platens.

4. The blow-moulding system according to one of Claims 2 or 3, **characterized in that** the second driving device comprises a high-speed spindle drive (18) with a comparatively long stroke or a combination of a short-stroke hydraulic drive (20) and such a spindle drive.

5. The blow-moulding system according to one of Claims 1 to 4, **characterized in that** the combination drive with the driving devices (16, 18, 20) not only serves for realizing the displacement of the closure halves (10, 11), but also for generating the mould clamping force.

6. The blow-moulding system according to Claim 5, **characterized in that** at least one spindle drive (18) and at least one hydraulic drive (20), by means of which the mould clamping force is generated, are mounted equiaxially or axially parallel and respectively arranged at the height of the blowing mould halves.

7. The blow-moulding system according to one of Claims 1 to 6, **characterized in that** it furthermore comprises a calibrating device (14) for the hollow body to be manufactured, as well as a driving device (21, 22) that is assigned to this calibrating device and operates independently of and non-equiaxially with the driving devices for the closure halves, wherein this driving device makes it possible to linearly displace the calibrating device synchronously with at least one of the closure halves/mould halves and independently of the closure halves (19, 11).

8. The blow-moulding system according to Claim 7, **characterized in that** the calibrating device (14) is realized in such a way that it can be linearly displaced relative to the machine frame (17) synchronously with only one of the closure halves (10, 11)/mould halves, as well as synchronously with both closure halves/mould halves.

9. The blow-moulding system according to one of Claims 1 to 8, **characterized in that** the calibrating device (14) comprises at least one arbor that can be inserted between the two mould halves perpendicular to the direction, in which the two mould halves are displaced when the blowing mould is opened/closed.

10. The blow-moulding system according to one of Claims 1 to 9, **characterized in that** it comprises at least two blow-moulding stations that respectively feature two closure halves, and **in that** each of these blow-moulding stations can be displaced on its respective machine frame (17) into a position underneath the extrusion head along a guide by means of a drive, namely perpendicular to the direction, in which the closure halves (10, 11) are displaced when the blowing mould is closed.

11. A blow-moulding method for manufacturing hollow bodies, in which the two closure halves (10, 11) that carry the mould halves of the blow-moulding device can be displaced relative to one another in order to open or close the blowing mould by utilizing a blow-moulding system according to one of Claims 1 to 8, **characterized in that** said method comprises at least one step, in which the blown hollow body is removed while the closure halves (10, 11) are opened and the blow pin device is positioned underneath the extrusion head and simultaneously receives a preform for the next blow-moulding cycle.

12. The blow-moulding method according to Claim 11, **characterized in that** it comprises at least one step, in which a calibrating device (14) for the hollow body to be manufactured that protrudes into the mould cavity is linearly displaced synchronously with at least one of the closure halves/mould halves by means of a driving device (21, 22) assigned thereto when the closure halves (10, 11) are closed.

13. The blow-moulding method according to Claim 11 or 12, **characterized in that** it comprises at least one step, in which only one closure half (10, 11) is linearly displaced relative to the other closure half while the other closure half remains in its position when the closure halves of the blow-moulding device are closed.

14. The blow-moulding method according to one of Claims 11 to 13, **characterized in that** it comprises at least one step, in which the two closure halves (10, 11) are linearly displaced apart from one another by different distances when the blowing mould is opened (asymmetric opening of the blowing mould).

15. The blow-moulding method according to one of Claims 11 to 14, **characterized in that** it comprises at least one step, in which a calibrating device (14) for the hollow body to be manufactured that protrudes into the mould cavity is linearly displaced synchronously with only one of the closure halves/mould halves by means of a driving device assigned thereto when the closure halves (10, 11) are open.

16. The blow-moulding method according to one of Claims 11 to 15, **characterized in that** it comprises at least the following sequence of steps:
- after closing the blowing mould, both closure halves (10, 11) are displaced from a position, in which the blowing mould is situated underneath the extrusion head, into a position distant from the extrusion head together with a calibrating device (14) that protrudes into the mould cavity;
- after the blow-moulding cycle, the two closure halves (10, 11) are displaced apart from one another and the mould is opened, wherein the calibrating device (14) is once again displaced into a position underneath the extrusion head;
- the blown hollow body is removed, wherein the closure device with the two closure halves (10, 11) is now asymmetrically opened;
- one of the closure halves is displaced while the other closure half remains in its position, wherein the closure device is now asymmetrically opened;
both closure halves (10, 11) are displaced relative to one another into the closed position of the blowing mould and a new blow-moulding cycle can then be carried out.

## Revendications

1. Système de moulage par soufflage pour la fabrication de corps creux, comprenant au moins un dispositif d'extrusion, de même qu'au moins un dispositif de moulage par soufflage qui est soit stationnaire si on utilise un dispositif de moulage par soufflage, soit déplaçable linéairement, si on utilise plusieurs dispositifs de moulage par soufflage, au moyen d'un organe de commande le long d'un guide par rapport au dispositif d'extrusion, dans lequel est prévu en outre un dispositif moteur au moyen duquel les deux moitiés refermables du dispositif de moulage par soufflage supportant les deux demi-moules du dispositif de moulage par soufflage sont déplaçables l'une par rapport à l'autre pour ouvrir ou fermer le moule de soufflage,
étant prévue une combinaison motrice comprenant au moins deux dispositifs moteurs (16, 18) actionnables indépendamment chacun pour soi ou en commun et au moyen desquels, premièrement, un déplacement des deux demi-moules du dispositif de moulage par soufflage l'un par rapport à l'autre à l'ouverture ou à la fermeture du moule de soufflage est possible, au moyen desquels, deuxièmement, un déplacement asymétrique s d'un seul des demi-moules par rapport à l'autre demi-moule qui conserve sa position est possible et au moyen desquels, troisièmement, un déplacement commun des deux demi-moules dans un sens de mouvement avec un moule de soufflage fermé ou ouvert est possible,
chacun des deux demi-moules d'un dispositif de moulage par soufflage étant déplaçable respectivement indépendamment de l'autre par rapport à l'autre demi-moule respectif tandis que l'autre demi-moule respectif du même dispositif de moulage par soufflage reste immobile,
**caractérisé en ce que** la combinaison motrice comprend un premier dispositif moteur (16) s'engrenant sur une seule des moitiés refermables (10) du dispositif de moulage par soufflage et au moyen duquel les deux moitiés refermables (10, 11) sont déplaçables ensemble linéairement dans le même sens sur le bâti de machine (17) sur lequel elles sont montées.

2. Système de moulage par soufflage selon la revendication 1, **caractérisé en ce qu'**il est prévu un second dispositif moteur (18) s'engrenant sur les deux moitiés refermables (10, 11) du dispositif de moulage par soufflage et que, au moyen de ce dispositif moteur ou de la combinaison des deux dispositifs moteurs (16, 18), les deux moitiés refermables (10, 11) sont déplaçables linéairement symétriquement ou asymétriquement l'une par rapport à l'autre simultanément sur le bâti de machine pour ouvrir ou fermer le moule de soufflage.

3. Système de moulage par soufflage selon la revendication 2, **caractérisé en ce que** le second dispositif moteur (18) s'engrenant sur les deux moitiés refermables, vu dans le sens vertical, s'étend au niveau des deux demi-moules du moule de soufflage et relie entre elles les deux moitiés refermables (10, 11) au niveau du moule de soufflage et/ou des plaques de montage du moule.

4. Système de moulage par soufflage selon une des revendications 2 ou 3, **caractérisé en ce que** le second dispositif moteur comprend une broche d'entraînement (18) tournant rapidement et ayant une course relativement longue ou une combinaison d'une commande hydraulique à course courte (20) et d'une broche d'entraînement de ce type.

5. Système de moulage par soufflage selon une des revendications 1 à 4, **caractérisé en ce que**, au moyen de la combinaison motrice comportant les dispositifs moteurs (16, 18, 20), à la fois les courses de déplacement des moitiés refermables (10, 11) sont parcourues et l'application de la force de fermeture est effectuée.

6. Système de moulage par soufflage selon la revendication 5, **caractérisé en ce qu'**au moins une broche d'entraînement (18) et au moins une commande hydraulique (20) au moyen de laquelle une force de fermeture est appliquée sont montées sur le même axe ou sur un axe parallèle et disposées respectivement au niveau des demi-moules de soufflage.

7. Système de moulage par soufflage selon une des revendications 1 à 6, **caractérisé en ce que** celui-ci comprend en outre un dispositif d'étalonnage (14) pour le corps creux à fabriquer et qu'il est prévu un dispositif moteur (21, 22) associé à celui-ci, indépendant des dispositifs moteurs pour les demi-moules et ne se déplaçant pas sur le même axe, au moyen duquel le dispositif d'étalonnage est déplaçable linéairement de manière synchrone avec au moins une des moitiés refermables/un des demi-moules et indépendamment des moitiés refermables (19, 11).

8. Système de moulage par soufflage selon la revendication 7, **caractérisé en ce que** le dispositif d'étalonnage (14) est conçu pour être déplaçable aussi bien de manière synchrone avec une seule des moitiés refermables (10, 11)/un seul des demi-moules que de manière synchrone avec les deux moitiés refermables/ demi-moules par rapport au bâti de machine (17).

9. Système de moulage par soufflage selon une des revendications 1 à 8, **caractérisé en ce que** le dispositif d'étalonnage (14) comprend au moins un mandrin qui peut être introduit dans le sens vertical au sens de déplacement des deux demi-moules à l'ouverture/la fermeture du moule de soufflage entre les deux demi-moules.

10. Système de moulage par soufflage selon une des revendications 1 à 9, **caractérisé en ce que** celui-ci comprend au moins deux postes de moulage par soufflage comprenant chacun deux moitiés refermables et que chacun de ces postes de moulage par soufflage est déplaçable sur son bâti de machine respectif (17) au moyen d'un organe de commande le long d'un guide vers une position située en-dessous de la tête d'extrusion et à angle droit par rapport au sens de déplacement des moitiés refermables (10, 11) à la fermeture du moule de soufflage.

11. Procédé de moulage par soufflage pour la fabrication de corps creux, dans lequel les moitiés refermables (10, 11) supportant les demi-moules du dispositif de moulage par soufflage sont déplaçables l'une par rapport à l'autre pour ouverture ou fermeture du moule de soufflage en utilisant un système de moulage par soufflage selon une des revendications 1 à 8, **caractérisé en ce que** celui-ci comprend au moins une étape dans laquelle le prélèvement du corps creux soufflé a lieu lorsque les moitiés refermables (10, 11) sont ouvertes pendant que le dispositif de mandrin de soufflage se trouve positionné en-dessous de la tête d'extrusion et reçoit simultanément une ébauche pour la prochaine opération de soufflage.

12. Procédé de moulage par soufflage selon la revendication 11, **caractérisé en ce que** celui-ci comprend au moins une étape dans laquelle un dispositif d'étalonnage (14) du corps creux à fabriquer saillant dans la cavité de moulage lorsque les moitiés refermables (10, 11) sont fermées se déplace linéairement au moyen d'un dispositif moteur (21, 22) de manière synchrone avec au moins une des moitiés refermables/un des demi-moules.

13. Procédé de moulage par soufflage selon la revendication 11 ou 12, **caractérisé en ce que** celui-ci comprend au moins une autre étape dans laquelle, lorsque les moitiés refermables du dispositif de moulage par soufflage sont ouvertes, seule une moitié refermable (10, 11) se déplace linéairement par rapport à l'autre moitié refermable tandis que l'autre moitié refermable respective conserve sa position.

14. Procédé de moulage par soufflage selon une des revendications 11 à 13, **caractérisé en ce que** celui-ci comprend au moins une étape dans laquelle les deux moitiés refermables (10, 11) s'écartent linéairement à l'ouverture du moule de soufflage et parcourent alors une course de déplacement différente (ouverture asymétrique du moule de soufflage).

15. Procédé de moulage par soufflage selon une des revendications 11 à 14, **caractérisé en ce que** celui-ci comprend au moins une étape dans laquelle un dispositif d'étalonnage (14) du corps creux à fabriquer saillant dans la cavité de moulage lorsque les moitiés refermables (10, 11) sont ouvertes se déplace linéairement au moyen d'un dispositif moteur qui lui est associé de manière synchrone avec une seule des moitiés refermables/un seul des demi-moules.

16. Procédé de moulage par soufflage selon une des revendications 11 à 15, **caractérisé en ce qu'**il comprend au moins la succession d'étapes suivantes :
- les deux moitiés refermables (10, 11) se déplacent après la fermeture du moule de soufflage en même temps qu'un dispositif d'étalonnage (14) saillant dans la cavité de moulage depuis une position dans laquelle le moule de soufflage se trouve en-dessous de la tête d'extrusion vers une position éloignée de la tête d'extrusion ;
- après l'opération de soufflage, les deux moitiés refermables (10, 11) s'écartent l'une de l'autre et le moule s'ouvre, le dispositif d'étalonnage (14) reprenant sa position en-dessous de la tête d'extrusion ;
- le corps creux soufflé est prélevé, le dispositif de fermeture comportant les deux moitiés refermables (10, 11) étant maintenant ouvert asymétriquement ;
- une des moitiés refermables se déplace, tandis que l'autre moitié refermable conserve sa position, le dispositif de fermeture étant maintenant ouvert symétriquement ;
les deux moitiés refermables (10, 11) se déplacent l'une par rapport à l'autre jusqu'à la position fermée du moule de soufflage et une nouvelle opération de soufflage peut suivre.
